Europäisches Patentamt

(19) European Patent Office

Office européen des brevets

(11) Veröffentlichungsnummer : **0 069 983**
**B1**

(12) **EUROPÄISCHE PATENTSCHRIFT**

(45) Veröffentlichungstag der Patentschrift :
**30.01.85**

(21) Anmeldenummer : **82106073.8**

(22) Anmeldetag : **07.07.82**

(51) Int. Cl.⁴ : **A 01 M   1/16**

(54) **Fliegenfänger.**

(30) Priorität : **09.07.81 DE 3127125**

(43) Veröffentlichungstag der Anmeldung :
**19.01.83 Patentblatt 83/03**

(45) Bekanntmachung des Hinweises auf die Patenterteilung : **30.01.85 Patentblatt 85/05**

(84) Benannte Vertragsstaaten :
**AT BE CH DE FR GB IT LI LU NL SE**

(56) Entgegenhaltungen :
**CH-A-    163 206
CH-A-    187 035
DE-C-    132 302
DE-C-    184 373
DE-C-    282 969
FR-A-    363 229
FR-A-    450 079
GB-A-    375 736**

(73) Patentinhaber : **FR. KAISER GMBH
Bahnhofstrasse 35
D-7050 Waiblingen (DE)**

(72) Erfinder : **Ammon, Helmut Karl
Oppenländer Strasse 26
D-7050 Waiblingen (DE)**
Erfinder : **Updike, John Godfrey
Alter Neustädter Weg 22
D-7050 Waiblingen (DE)**

(74) Vertreter : **Bartels, Hans et al
Lange Strasse 51
D-7000 Stuttgart 1 (DE)**

## Beschreibung

Die Erfindung betrifft einen Fliegenfänger mit einem Fangstreifen aus Papier, der etwa in der Mitte seiner Länge um eine quer zu seiner Längsachse verlaufende Falzlinie zusammengefaltet und um diese zu einer Rolle aufgewickelt ist und dessen beide Seiten mit einem Klebstoff beschichtet sind, wobei die beiden an der Außenseite der Rolle liegenden Endabschnitte vor dem Anlegen an die Rolle beidseitig unbeschichtet sind und der unbeschichtete Endabschnitt mindestens des einen Endes des Fangstreifens, das in der Rolle die Außenseite bildet, sich mindestens über die Länge eines Rollenumfanges erstreckt.

Durch die CH-PS 187 035 ist ein Fliegenfänger mit einem Fangstreifen dieser Art bekannt, bei dem durch die klebstoffreien Endabschnitte des Fangstreifens dieser, ohne die Hände zu verschmutzen, von der Rolle abgezogen werden kann. Dieser bekannte Fliegenfänger war jedoch dazu vorgesehen, wie das durch die DE-PS 132 302 und die FR-PS 363 229 bekannt war, bei der Benutzung mit einem Ende an der Decke eines Raumes befestigt zu werde so daß er dann vertikal von der Decke herabhing. Dies hat aber den Nachteil, daß die Fangstreifen dieser bekannten Fliegenfänger nur eine beschränkte Länge haben können, weil sie sonst zu tief von der Decke in den Raum hinabreichen und dadurch den übrigen Verkehr im Raum stören.

Um mit solchen Fliegenfängern eine wirksame Insektenbekämpfung durchführen zu können, müssen daher sehr viele Fliegenfänger an der Decke angebracht werden, was sehr umständlich und zeitraubend ist.

Der Zweck der Erfindung besteht darin, den altbekannten Fliegenfänger mit einem Fangstreifen, der mit einem ungiftigen Klebstoff beschichtet werden kann, so auszubilden, daß er mit den die Umwelt verschmutzenden Giftstoffen zur Insektenbekämpfung sowohl hinsichtlich seiner Wirkung als auch hinsichtlich der Bequemlichkeit seiner Anwendung und hinsichtlich seines Preises konkurrieren kann.

Hierbei benutzt die Erfindung die durch die DE-PS 180 575 bekannte Lehre, daß die Fangwirkung eines Fliegenfängers mit klebrigem Fangstreifen dadurch vergrößert werden kann, daß man dem Fangstreifen eine möglichst große Breite gibt. Bei der Verwendung von Fangstreifen mit großer Breite ergibt sich jedoch die Schwierigkeit, daß, wenn man einen solchen Streifen wie bei anderen bekannten Fliegenflängern aus Papier herstellt und zu einer Rolle zusammenwickelt, beim Abziehen des Fangstreifens von der Rolle sehr große Kräfte aufgewendet werden müssen, die zum Zerreißen des Fangstreifens führen können.

Der Erfindung liegt daher die Aufgabe zugrunde, einen Fliegenfänger mit Fangstreifen zu schaffen, der eine um ein Vielfaches vergrößerte Fangwirkung hat wie die bekannten Fliegenfänger und der einfach aufgehängt und preiswert herstellbar ist.

Diese Aufgabe ist durch die Gesamtkombination der im Kennzeichen des Anspruches 1 angeführten Merkmale gelöst. Durch das Merkmal a) wird die Reißfestigkeit des Fangstreifens erhöht, so daß der Fangstreifen mit wesentlich grösserer Breite hergestellt werden kann, ohne daß beim Abwickeln von der Rolle ein Zerreißen des Fangstreifens befürchtet werden muß.

Durch das Merkmal b) wird eine sehr einfache Verstärkung der Endränder des Fangstreifens erreicht, was sehr einfach maschinell durchführbar ist, so daß durch diese Art der Verstärkung bei der Herstellung kaum zusätzliche Kosten entstehen.

Durch das Merkmal c) wird eine ebenfalls sehr einfach herstellbare und zweckmäßige Aufhängemöglichkeit geschaffen. Man braucht nur durch die Öse eine Schnur hindurchzuziehen, mittels deren man dann die beiden Enden in einer waagerechten Lage unter einer Decke befestigen kann. Dadurch kann der Fangstreifen praktisch so lang ausgeführt werden wie das eine Längendimension der Decke zuläßt. In Verbindung mit dem am Schluß des Oberbegriffs des Anspruchs 1 angeführten Merkmal, daß der unbeschichtete Endabschnitt mindestens des einen Endes des Fangstreifens, das in der Rolle die Außenseite bildet, sich mindestens über die Länge eines Rollenumfanges erstreckt, wird erreicht, daß dieser so hergestellte verhältnismäßig große Fangstreifen leicht verpackt werden kann, da seine Außenseite vom Klebstoff frei ist. Dadurch, daß hierbei die beiden Endabschnitte des Streifens vor dem Zusammenwickeln klebstoffrei sind, ist auf jeden Fall der die Außenseite der Rolle bildende Endabschnitt des Fangstreifens beidseitig klebstoffrei, was seine Handhabung erleichtert. Man kann also durch die Öse des inneren Endabschnittes eine Schnur ziehen, die man an einem Haken einhängt. Dann braucht man nur am anderen beidseitig klebstoffreien Endabschnitt des Streifens zu ziehen, um den Streifen von der Rolle abzuziehen.

Bei einem besonders bevorzugten Ausführungsbeispiel liegt die Verstärkung des verstärkten Endrandes an der einen und die Ecke an der anderen Breitseite des Fangstreifens an. Dadurch wird erreicht, daß der eigentliche Fangstreifen sich zwischen den beiden durch das zickzackförmige Falten und durch die Ecke gebildeten Verstärkungen befindet und so besonders gut vor einem Einreißen geschützt ist. Um die Verstärkung hierbei noch zu erhöhen, kann bei diesem bevorzugten Ausführungsbeispiel die Ecke an die benachbarte Breitseite des Fangstreifens angeklebt sein.

Ein gemäß der Erfindung hergestellter Fliegenfänger kann einen Fangstreifen haben, der mindestens 10 cm, vorzugsweise etwa 20 cm, breit und mindestens 120 cm, vorzugsweise 220 cm, lang ist. Er kann aber auch mit einem Fangstreifen ausgeführt werden, der wesentlich breiter und länger ist.

Die Erfindung ist in der folgenden Beschreibung an Hand der Zeichnung im einzelnen erläutert.

Es zeigen :

Figur 1 eine perspektivische Ansicht eines Ausführungsbeispieles eines um eine von seinen Enden entfernte Falzlinie gefalteten und um diese Falzlinie zusammengewickelten Fangstreifens ;

Figuren 2 und 3 Axialschnitte von zwei verschiedenen Ausführungsbeispielen von hülsenförmigen Behältern für die Fangstreifenrolle nach Fig. 1 ;

Figuren 4 und 5 eine Ansicht eines Endes des Fangstreifens bzw. einen Schnitt nach der Linie V-V in Fig. 4 in vergrößerter Darstellung ;

Figuren 6 und 7 zwei zueinander senkrechte Schnitte einer Raumdecke mit parallel zum abgebrochen dargestellten Schnitt nach Fig. 6 an ihr angehängten Fangstreifen ;

Figur 8 eine der Fig. 4 entsprechende Ansicht eines Fangstreifenendes mit einer anderen Verstärkung durch zugfeste Fäden.

Figuren 9 und 10 den Fig. 1 bzw. 4 entsprechende Darstellungen eines zweiten Ausführungsbeispieles.

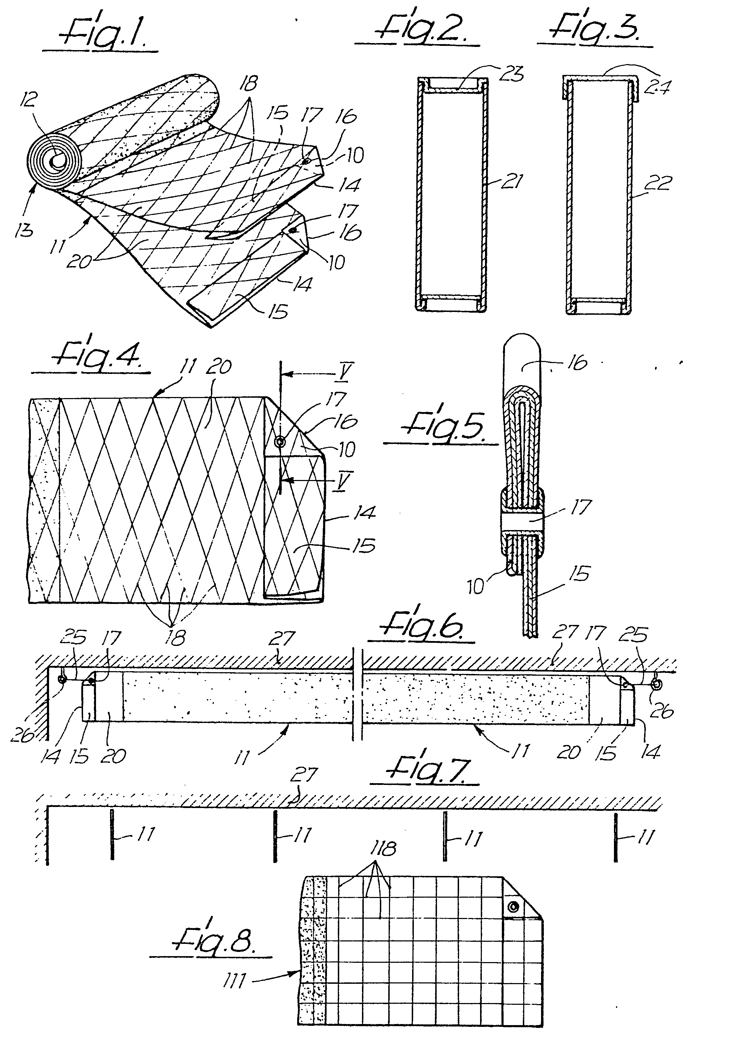

Der in der Zeichnung zerlegt dargestellte Fliegenfänger weist einen Fangstreifen 11 auf, der um eine etwa in seiner Mitte liegende Falzlinie 12 so zusammengefaltet und zu der in Fig. 1 dargestellten Rolle 13 zusammengewickelt ist, daß im zusammengewickelten Zustand sich beide Endkanten 14 des Fangstreifens 11 decken. Die beiden Endränder des Fangstreifens 11 sind mit Verstärkungen 15 versehen, die durch zweimaliges zickzackförmiges Falten der Fangstreifenenden gebildet sind. Die eine Ecke 10 eines jeden verstärkten Endrandes ist um eine diagonal verlaufende Falzlinie 16 über die Verstärkung 15 gefaltet und mit dem Fangstreifenende durch eine durchgestanzte Öse 17 fest verbunden, die dadurch ein Befestigungsmittel des Fangstreifens an einer Decke bildet. Dadurch, daß die Öse durch sechs Schichten des Endrandes des Fangstreifens hindurchgestanzt ist, sind ihre Verbindungsstellen mit dem Fangstreifen besonders gut verstärkt, so daß ein Reißen des Fangstreifens in der Nachbarschaft der Öse 17 nicht befürchtet werden muß.

Der Fangstreifen 11 besteht aus Papier, das durch Scharen von sich kreuzenden, zugfesten Verstärkungsfäden 18 aus Glas verstärkt ist, die im Papier eingebettet sind. Es können hierzu handelsübliche Papiere verwendet werden. Jede der beiden Seiten des Fangstreifens 11 ist mit einer Schicht eines nichtgiftigen und nicht trocknenden Klebstoffes beschichtet, der die Fliegen anlockt und an dem sie hängenbleiben. Hierbei sind.

Endabschnitte 20 des Fangstreifens, die sich mindestens über die Länge eines Rollenumfanges erstrecken, nicht beschichtet. Dadurch wird erreicht, daß in zusammengerolltem Zustand der äußere Endabschnitt 20 des Fangstreifens die Fangstreifenrolle 13 umhüllt, so daß die Rolle nicht in ihrem Behälter festklebt und leicht gehandhabt werden kann, ohne daß dabei die Hände mit dem Klebstoff verunreinigt werden.

In den Fig. 2 und 3 sind zwei Ausführungsbeispiele von hülsenförmigen Behältern 21 und 22 für die Fangstreifenrolle 13 dargestellt. Der Behälter 21 weist einen in den Behälter einschiebbaren Deckel 23 und der Behälter 22 einen auf den Behälter aufsetzbaren Deckel 24 auf.

Dadurch, daß mindestens der rollenäußere Endabschnitt 20 des zur Rolle 13 zusammengewickelten Fangstreifens in dem oben beschriebenen Umfang nicht beschichtet ist, ist das Einführen und das Herausnehmen der Fangstreifenrolle in den bzw. aus dem Behälter 21 oder 22 ganz problemlos.

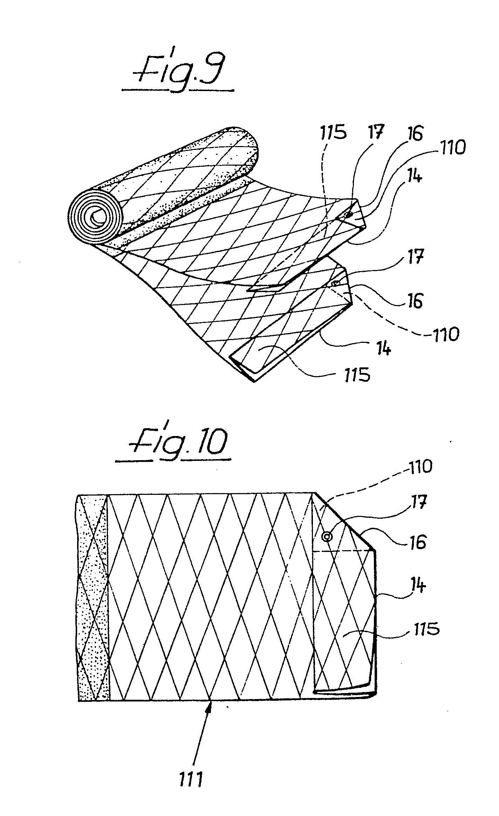

Beim Benutzen eines Fliegenfängers mit einem so in einen Behälter 21 oder 22 verpackten, zur Rolle 13 aufgewickelten Fangstreifen 11 wird zunächst der Behälter durch Entfernen des Deckels 23 bzw. 24 geöffnet und die Fangstreifenrolle 13 herausgenommen. Dann wird durch die Öse 17 an dem vorzugsweise rolleninneren Ende eine Schnur 25 hindurchgezogen und an einem Haken 26 befestigt (Fig. 6), der in eine z. B. Stalldecke 27 eingeschlagen oder eingeschraubt ist. Jetzt wird durch die Öse 17 des anderen Endes des Fangstreifens wieder eine Schnur 25 hindurchgezogen und an einem in entsprechendem Abstand in der Decke 17 befestigten Haken 26 eingehängt. Dadurch, daß der Fangstreifen 11 durch die Verstärkungsfäden 18 verstärkt ist und die Ösen 17 in die sechsfach verstärkten Fangstreifen-Endränder eingesetzt sind, wird die Möglichkeit geschaffen, den Fangstreifen mit so großen Abmessungen herzustellen, daß seine Fangfläche ein Vielfaches der Fangfläche von Fangstreifen handelsüblicher Fliegenfänger ergibt. Beim dargestellten Ausführungsbeispiel beträgt die Breite des Fangstreifens 20 cm und seine Länge 220 cm. Sehr befriedigende Resultate lassen sich jedoch bereits mit einem Fangstreifen einer Breite von 10 cm und einer Länge von 120 cm erzielen.

Bei dem in den Fig. 1 bis 7 dargestellten Fangstreifen verlaufen die Verstärkungsfäden 18 in diametraler Richtung. In Fig. 8 ist ein Ausführungsbeispiel eines Fangstreifens 111 dargestellt, bei dem die zugfesten Fäden 118 parallel und senkrecht zur Längsachse des Fangstreifens verlaufen.

Das in den Fig. 9 und 10 dargestellte zweite Ausführungsbeispiel unterscheidet sich von dem Ausführungsbeispiel nach den Fig. 1 bis 8 dadurch, daß hier die durch zickzackförmiges Falten des Endrandes gebildete Verstärkung 115 an die in Fig. 10 dem Betrachter zugekehrte Breitseite des Fangstreifens 111 und die Ecke 110 an die andere, in Fig. 10 dem Betrachter abgekehrte Breitseite des Fangstreifens um die Falzlinie 16 angelegt und an diese Breitseite angeklebt ist. Dadurch ist der zwischen die Verstärkung 115 und die Ecke 110 eingeklemmte Fangstreifen auch bei größeren Belastungen gegen Einreißen geschützt.

Anstelle des beim bevorzugten Ausführungsbeispiel für den Fangstreifen verwendeten Papiers, das durch eingebettete Glasfäden verstärkt ist, kann auch ein Papier verwendet werden, das durch andere zugfeste Fäden, z. B. durch Drähte, Kunststoffäden, insbesondere Polyamidfäden, oder dergleichen verstärkt ist.

Der Behälter für die Fangstreifenrolle 13 kann auch als schmale, im Querschnitt rechteckige Schachtel ausgebildet sein, die durch einen die eine Längswand bildenden Deckel verschließbar ist.

## Ansprüche

1. Fliegenfänger mit einem Fangstreifen (11) aus Papier, der etwa in der Mitte seiner Länge um eine quer zu seiner Längsachse verlaufende Falzlinie (12) zusammengefaltet und um diese zu einer Rolle (13) aufgewickelt ist und dessen beide Seiten mit einem Klebstoff beschichtet sind, wobei die beiden an der Außenseite der Rolle liegenden Endabschnitte (20) vor dem Anlegen an die Rolle (13) beidseitig unbeschichtet sind und der unbeschichtete Endabschnitt (20) mindestens des einen Endes des Fangstreifens (11), das in der Rolle (13) die Außenseite bildet, sich mindestens über die Länge eines Rollenumfanges erstreckt, gekennzeichnet durch die Kombination der Merkmale

a) daß in das Papier des Fangstreifens (11, 111) zur Erhöhung der Reißfestigkeit Fäden (18) eingebettet sind,

b) daß beide Endränder des Fangstreifens (11, 111) mit einer durch mehrfaches Zusammenfalten des Fangstreifenendes (11, 111) gebildeten Verstärkung (15, 115) versehen sind,

c) daß die durch das Zusammenfalten gebildeten Lagen der beiden Verstärkungen durch Ösen (17) zusammengehalten sind, die zum Aufhängen des Fangstreifens (11, 111) an einer Decke dienen, derart, daß eine der Längskanten des Fangstreifens (11, 111) parallel zur Decke verläuft.

2. Fliegenfänger nach Anspruch 1, dadurch gekennzeichnet, daß im zusammengewickelten Zustand beide unbeschichteten Endabschnitte (20) des Fangstreifens sich mindestens über die Länge eines Rollenumfanges erstrecken.

3. Fliegenfänger nach Anspruch 1 oder 2, dadurch gekennzeichnet, daß die Verstärkung (15, 115) des Endrandes des Fangstreifens (11) durch zickzackförmiges Falten des Fangstreifenendes gebildet ist und daß die eine Ecke (10, 110) dieses so gebildeten verstärkten Endrandes umgefaltet und mit dem Fangstreifen und der Verstärkung durch die Öse (17) verbunden ist.

4. Fliegenfänger nach Anspruch 3, dadurch gekennzeichnet, daß die Verstärkung (115) des verstärkten Endrandes an der einen und die Ecke (110) an der anderen Breitseite des Fangstreifens (11) anliegen.

5. Fliegenfänger nach Anspruch 4, dadurch gekennzeichnet, daß die Ecke (110) an die benachbarte Breitseite des Fangstreifens (11) angeklebt ist.

6. Fliegenfänger nach einem der Ansprüche 1 bis 5, dadurch gekennzeichnet, daß der Fangstreifen (11, 111) mindestens 10 cm, vorzugsweise etwa 20 cm, breit und mindestens 120 cm, vorzugsweise 220 cm, lang. ist.

## Claims

1. Fly catcher comprising a catching strip (11) of paper folded at approximately the middle of its length about a folding line (12) extending transversely to its longitudinal axis and rolled up about this line to form a roll (13), both sides of which paper are coated with an adhesive, the two end sections (20) situated on the outside of the roll being uncoated on both sides before they are placed in contact with the roll (13) and the uncoated end section (20) of at least that end of the catching strip (11) which forms the outside on the roll (13) extending at least over the length of one circumference of the roll, characterised by the combination of the features :

a) that threads (18) are embedded in the paper of the catching strip (11, 111) to increase the tear resistance,

b) that the edges of both ends of the catching strip (11, 111) are provided with a reinforcement (15, 115) formed by repeated folding of the end of the catching strip (11, 111),

c) the layers of the two reinforcements formed by folding are held together by eyelets (17) serving to suspend the strip (11, 111) from a ceiling so that one of the longitudinal edges of the catching strip (11, 111) extends parallel to the ceiling.

2. Fly catcher according to claim 1, characterised in that when the catching strip is rolled up, both uncoated end sections (20) of the catching strip extend at least over the length of one circumference of the roll.

3. Fly catcher according to claim 1 or claim 2, characterised in that the reinforcement (15, 115) at the edge of the end of the catching strip (11) is formed by zig-zag folding of the end of the catching strip and that one corner (10, 110) of the reinforced edge thus formed is folded over and connected to the catching strip and the reinforcement by the eyelet (17).

4. Fly catcher according to claim 3, characterised in that the reinforcement (115) of the reinforced edge at the end of the strip lies in contact with one broadside of the catching strip (11) while the corner (110) lies in contact with the other broadside of the catching strip (11).

5. Fly catcher according to claim 4, characterised in that the corner (110) is glued to the adjacent broadside of the catching strip (11).

6. Fly catcher according to one of the claims 1 to 5, characterised in that the catching strip (11, 111) is at least 10 cm, preferably about 20 cm wide and at least 120 cm, preferably 220 cm long.

## Revendications

1. Piège à mouches comportant une bande de retenue (11), en papier qui est repliée aux environs de la moitié de sa longueur autour d'une ligne de pliage (12) s'étendant transversalement à son axe longitudinal et qui est enroulée autour de cette ligne de pliage sous forme d'un rouleau (13), et qui est revêtue sur ses deux côtés d'une matière adhésive, les deux sections extrêmes (20) disposées sur l'extérieur du rouleau (13) n'étant pas revêtue, avant la disposition en rouleau (13), et la section extrême (20) non revêtue d'au moins l'une des extrémités de la bande de retenue (11), qui forme le côté extérieur dans le rouleau (13) s'étend au moins sur la longueur d'une circonférence du rouleau, caractérisé par la combinaison des caractéristiques suivantes :

a) dans la bande de retenue (11, 111) en papier sont noyées des fibres (18) pour renforcer la résistance au déchirement,

b) les deux bords extrêmes de la bande de retenue (11, 111) sont munis de renforcements (15, 115) formés d'une pluralité de pliages des extrémités de la bande de retenue (11, 111),

c) les couches des deux renforcements formées de plis sont maintenues assemblées par des œillets (17) qui servent à suspendre la bande de retenue (11, 111) à un plafond, de telle sorte que l'un des bords longitudinaux de la bande de retenue (11, 111) s'étend parallèlement au plafond.

2. Piège à mouches selon la revendication 1, caractérisé par le fait que, dans la condition d'enroulement les deux sections extrêmes (20) non recouvertes de la bande de retenue s'étendent au moins sur la longueur d'une circonférence du rouleau.

3. Piège à mouches selon la revendication 1 ou 2, caractérisé en ce que le renforcement (15, 115) des bords extrêmes de la bande de retenue (11) est formé par pliage en zig-zag de l'extrémité de cette bande et en ce que l'un des coins (10, 110) du renforcement ainsi constitué est plié sur le bord extrême et est relié à la bande de retenue et au renforcement par l'œillet (17).

4. Piège à mouches selon la revendication 3, caractérisé par le fait que le renforcement (115) du bord extrême renforcé est disposé sur l'un des côtés de la bande de retenue (11) et le coin (110) est disposé sur l'autre côté de la bande de retenue.

5. Piège à mouches selon la revendication 4, caractérisé par le fait que le coin (110) est collé sur le côté adjacent de la bande de retenue (11).

6. Piège à mouches selon l'une des revendications 1 à 5, caractérisé en ce que la bande de retenue (11, 111) a une largeur d'au moins 10 cm, de préférence d'environ 20 cm, et une longueur d'au moins 120 cm, de préférence de 220 cm.

Fig.1. Fig.2. Fig.3. Fig.4. Fig.5. Fig.6. Fig.7. Fig.8.

## _Fig.9_

## _Fig.10_